# EUROPEAN PATENT APPLICATION

(11) **EP 0 905 959 A2**
(43) Date of publication of application: **31.03.1999**
(21) Application number: 98306119.3
(22) Date of filing: 31.07.1998
(51) Int. Cl.: H04M 7/00, H04L 12/64

(54) **A packet-switched-network telephone system**

(30) Priority: 01.08.1997 US 904465
(71) Applicant: Comverse Network Systems, Inc., Wakefield, Massachusetts 01880 (US)
(72) Inventor: Picard, Donald F., Medford, Massachusetts 02155 (US)
(74) Representative: Skone James, Robert Edmund

(57) **Abstract**

A telephone system is disclosed establishing a link over a packet-switched-network (16), such as the Internet, between two telephone interfaces (10,20) by exchanging network addresses. The addresses can include ATM addresses to allow a virtual connection to be established between the interfaces. The interfaces exchange speech data packets of speech signals from a called party telephone and a calling party telephone over the network. An interface converts the speech signals of the parties into the speech data packets. The system dynamically allocates network and interface resources to complete the telephone call transaction. The system provides a number of enhanced calling services not normally available to PSTN subscribers including: message-delivery, call-back, call-screening, network-camp-on, call-back-from-queue, find-me, meet-me-pager, call-forwarding, call-interrupt, call-waiting, business-dialing, automatic-call-distribution, virtual-automatic-call-distribution, speed-dial, call-transfer, conference-calling and network-administration. Echo cancellation is used to eliminate echoes caused by PSTN circuits associated with the telephones. Silence detection is used to improve network efficiency by not sending packets when the parties are not speaking. The delay in the packet-switched-network is used to adjust the size of sound segments formed into a packet. The interfaces allow the system to provide end points in a packet-switched network that manage a telephone call over the packet switched network.

## Description

### Cross Reference to Related Applications

This application is related to U.S. applications having serial number 08/743,793 entitled System For Accessing Multimedia Mailboxes And Messages Over The Internet Via Telephone and serial number 08/792,136 entitled A Telephone System Integrating A Public Switched Telephone Network, A Packet Switched Network And A Call Answering System and U.S. Patents 5,029,199, 5,193,110 and 5,493,607, all incorporated by reference herein.

The present invention is directed to a system for placing telephone calls between two telephones using a packet-switched-network, such as the Internet/intranet or an asynchronous transfer mode (ATM) network and, more particularly, to a system that does so without requiring the calling party or the called party have special equipment, such as a computer, and does so using endpoint managers to manage the call.

In today's public telephone network, the most common device used is the plain old telephone service (POTS) analog telephone. The problem with the POTS telephone service is it is very limited in terms of what services it can offer. Private business exchanges (PBXs) are capable of providing extensive specialized calling services over a public switched telephone network (PSTN), however, a telephone must be directly connected to the PBX as an extension. POTS is also relatively costly in comparison with digital forms of communication. For example, an e-mail service subscriber can send an unlimited number of unlimited length messages at a low fixed monthly service cost. In addition, typical POTS service dedicates a channel between the calling and called parties such that when the parties are not talking, the bandwidth of the channel is being wasted transmitting silence. Because this dedicated channel is being provided there is very little incentive to perform sophisticated computationally intensive audio compression on the speech to more efficiently carry the speech over the channel.

With the explosion of the Internet, and with the relatively inexpensive digital networking it affords, Voice Over the Internet (VOI) is quickly becoming a reality. Products are already available that provide for PC-to-PC voice connections (Vocaltec, et al), and recently there have been product announcements for Telephone-to-PC and Telephone-to-Telephone products (Dialogic/Vocaltec, Micom). Each of these products requires the caller and called party to have specialized equipment and subscribe to an Internet service. Each of these products also uses a transmission bandwidth equivalent to an analog voice circuit.

What is needed is a system that will allow any calling party to place a call to any called party using a packet-switched-network, such as the Internet or an intranet, using compressed signals, thereby obtaining a lower cost of service, providing more efficient utilization of the communication bandwidth, without requiring the parties to have special equipment, without requiring the parties to subscribe to an Internet service provider and which will also provide enhanced calling service to the parties.

In a conventional telephone network one or more centralized points, typically central offices, manage a telephone call by checking to see if the called number is an existing PSTN telephone number, connecting the call, providing status information to the caller, such as a ringing signal, determining whether the called party has answered, etc. In a distributed packet-switched network, such as the Internet, there are no centralized points to perform such management. What is needed is a system that provides end point managers to manage a telephone call over a packet-switched network.

In conventional telephone networks a telephone call is managed by signalling systems, such as SS7 switches, until the end office becomes involved in the call. Once the end office becomes involved the network resources needed to handle the entire transaction are committed until the entire transaction is completed. For example, when the called party does not answer and a message is to be left on a voice message system, associated with the called party, the network connection and all network resources remain allocated to the call until the message is saved for the called party. What is needed is a system that dynamically allocates network resources as needed to complete a transaction.

Because the packet-switched network is much less expensive for communication between two points, a system that automatically routes toll calls over the packet-switched network is needed to reduce the callers cost of communication.

According to one aspect of the present invention a system is provided that establishes a link over a packet-switched-network between two telephone interfaces by exchanging network addresses and performs speech data packet exchange of speech signals between a called party telephone and a calling party telephone. The interfaces convert the speech signals of the parties into the speech data packets. The system provides a number of enhanced calling services not available to PSTN subscribers. The system also manages the call by dynamically allocating network and interface resources in a way that reduces network utilization. Echo cancellation is used to eliminate echoes caused by PSTN circuits associated with the telephones. Silence detection is used to improve network efficiency by not sending packets when the parties are not speaking. Lengths of delays in the packet-switched network are used to adjust the size of sound segments formed into a packet.

The present invention typically provides a calling party with the ability to call a called party using a digital packet-switched-network, such as the Internet, without requiring the called or calling parties to have special equipment.

The present invention typically provides telephone to telephone based, real-time, packet switched conversation.

The present invention typically improves voice channel transmission efficiency by not transmitting soundless portions of a telephone call.

The present invention typically uses connection protocols to reserve bandwidth or allocate network resources for the call so that delay is minimized in the packet-switched-network.

The present invention typically provides advanced telephone services, such as call forwarding or call queuing, for any telephone.

The present invention typically provides a smart, computationally powerful telephone system that can provide features that traditional systems, such as PBXs, cannot provide, such as screen based administration used for setting up an exclusion list to reject calls from selected calling parties.

The present invention typically provides enhanced calling services to take advantage of an inexpensive digital network for sophisticated communication between the calling and called parties.

The present invention typically performs compression and decompression of the voice signal transmitted over the packet-switched-network to reduce network usage.

The present invention typically suppresses echo signals occurring over the network when analog telephone circuits having hybrid circuits are part of the communication path.

The present invention typically provides a system that works with hardware commonly available and deployed today.

The present invention typically provides a system that does not require the subscriber to obtain special equipment, such as a computer or a simultaneous voice and data modem.

The present invention typically adjusts packet size of speech packets according to network delay.

The present invention typically provides end points in a packet-switched network that manage a telephone call over the packet switched network while dynamically allocating network resources as needed to complete the call transaction responsive to the service being provided.

The present invention typically provides a system that automatically places toll calls over the packet-switched network.

These together with other advantages which will be subsequently apparent, reside in the details of construction and operation as more fully hereinafter described and claimed, reference being had to the accompanying drawings forming a part hereof, wherein like numerals refer to like parts throughout.
Figure 1 illustrates the system components in an digital network telephone call;
Figure 2 depicts the components of the system of the present invention;
Figure 3 depicts another embodiment for handling toll calls;
Figure 4 depicts the operations that occur on a source side (platform 14) during a telephone call;
Figure 5 depicts the operations that occur on a destination side (platform 18) during a telephone call;
Figure 6 depicts the operations of the Message-Delivery enhanced service;
Figure 7 depicts a Camp-On service;
Figure 8 depicts a Find-Me service;
Figure 9 depicts the system ln an intracompany environment; and
Figure 10 illustrates echo cancellation.

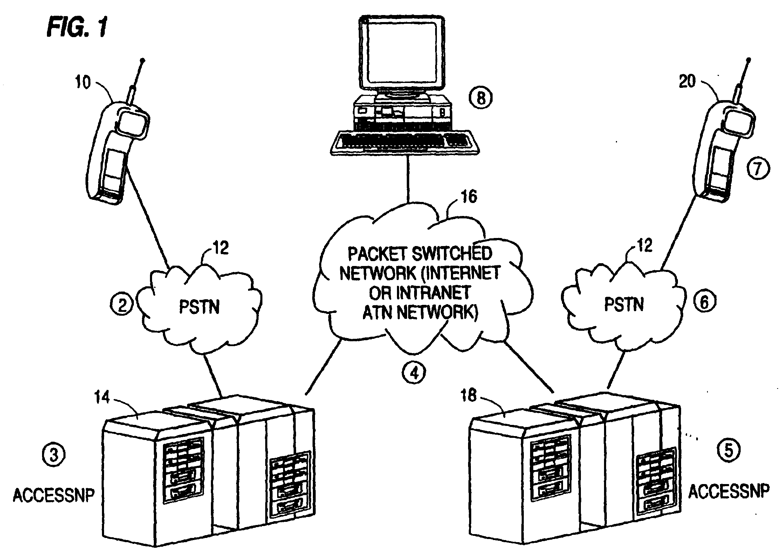

In a typical telephone call flow, in accordance with an embodiment of the present invention, a calling party subscriber using conventional telephone 10, as illustrated in Figure 1, calls through a public switched telephone network (PSTN) 12 to an originating or source service platform 14. The source platform 14 answers the call with an application that asks the caller to identify himself (account number, pass code, etc.), or uses automatic number identification (ANI) from the PSTN 12 to identify the caller/calling party telephone. If necessary, the source platform 14 asks the caller for the telephone number of the person they are trying to reach. The source platform 14 looks up the telephone number in a table to determine what equipment is servicing the area for the telephone number input by the caller. Using a packet-switched-network 16, such as the Internet that connects a system or group of platforms, the source platform 14 communicates with a destination platform 18 servicing the area of the called telephone. This communication involves identifying the called and calling parties, identifying the originating source platform 14, and determining real-time delay characteristics of the network connecting the two platforms 14 and 18. The two end points 14 and 18 manage the telephone call over the network 16.
Once the destination platform 18 has all of the appropriate information, it places an outgoing call over the PSTN 12 to the number or called party the caller asked to be dialed. The destination platform 18 monitors the outgoing call for ringing/busy/answer condition. Prior to the call being answered, the destination platform 18 indicates call status to the originatng source platform 14 and the source platform 14 can indicate the status to the caller such as by playing a ringing signal. When the call is answered via a telephone 20, the destination platform 18 indicates this to the source platform 14, the source platform 14 stops playing ringing tones to the caller and both systems begin the process of compressing the incoming speech from their respective PSTN connections, shipping it via packet-switched data packets to the other platform, while at the same time, accepting incoming packets from the other platform, and decompressing the speech to play it out over the respective PSTN connection to the handset or telephone.

During this "talking" period, each platform 14/18 is responsible for performing A/D and D/A conversion of the speech (if necessary), performing encryption/decryption (if desired), compressing/decompressing the speech, performing echo cancellation of the data/signal it is outputting to the respective telephone (20/10) to make sure the same data is not also being transmitted back to the speaking party. Each platform 14/18 is also monitoring the PSTN connection for voice energy, and is only shipping speech data packets containing actual speech, thus avoiding the transmission of "silence." The system also measures network delay and sets a packet segment size, based on the delay, for the speech packets transferred.

The two parties (via the telephones 10/20) communicate as they normally do, until one party hangs up. The hang up is detected at the appropriate PSTN connection, and a packet is sent to the other platform to indicate the conversation is complete. Call detail logging is then performed (length of call, packets transmitted, etc.) for any use charges applicable.

A more detailed discussion of how this operation is performed as well as the components of the platforms will be discussed later herein.

Given the above-discussed basic call scenario, the following exemplary enhanced calling services can be added: Message-Delivery, Call-Back, Call-Screening, Find-Me, Network-Camp-On, Call-Back from call in Queue Service, Meet-Me (pager), Call-Forwarding, Call-Interrupt/Call-Waiting, Business-Dialing, Automatic Call Distribution (ACD)/Virtual ACD, Anywhere-Speed-Dial, Call-Transfer, Conference-Calling, and Administration via the Web. These services will be briefly described below and discussed in detail later herein.

Message-Delivery is a feature by which the destination platform 18 monitors the outgoing call for a ring-no-answer or busy condition, and returns status to the originating source platform 14. In the case of a busy condition, the destination platform 18 can immediately disconnect and allow the source platform 14 to continue interacting with the caller. In the case of ring-no-answer condition, the destination platform 18 must continue to monitor the line for an answer condition, until the caller decides to give up. In either case, the source platform 14 offers the caller (calling party subscriber) the option to leave a message by pressing a key of the telephone, such as "#". Once the caller presses the specific key, the destination platform 18 drops out of the call. The source platform 14 then prompts the caller to record a message, which is stored locally on the source platform 14 until the recording is complete. When the caller is satisfied, the source platform 14 initiates a new session with destination platform 18 in which the message is sent to the destination platform 18 and where an outdial request is created on destination platform 18 for the original called party telephone number.

The source platform 14 as noted above sends the message data to destination platform 18 so it is local to the destination platform 18 system at the time of the message delivery operation. The message data is then removed from the source platform 14 system. Configuration parameters stored on the destination platform 18 determine when and how often to attempt the called party number to deliver the message. Message Delivery is a useful service in particular for all of the telephones having answering devices (since they cannot pick up on a busy condition), and yet still allow messages to be left.

By dropping the destination platform 18 out of the call, the network resources between the source and destination are dynamically deallocated, thereby freeing the resources for other uses. When the source platform 14 initiates the transfer of the recorded message, the resources of the network needed to transfer the message are dynamically allocated to the transaction involving the message delivery service. After the message is transferred from the source platform 143 to the destination platform 18, the storage resources of the source 14 are dynamically made available for other uses while those of the destination 18 are allocated to message delivery.

Call-Back is a feature by which the platform 18 performs the Message-Delivery feature as discussed above, but when the called party answers the telephone 20, during the message delivery operation, a voice application plays the message and allows the called party to press a single key (or otherwise indicate via speech recognition) to indicate they wish to return the call to the calling party. In such a situation, the destination platform 18 becomes the source platform and the sequence of events previously discussed are performed. In this scenario, the normal real-time call conversation sequence occurs as outlined in the beginning of this section. In the call-back service the network resources are dynamically allocated to the return call as needed by the called party.

Call-Screening is a feature by which the destination platform 18 performs a look-up on the called party's telephone number to determine if he is also a subscriber (a called party subscriber) to the services offered by the system. If so, the destination platform 18 monitors the outgoing line for an answer condition, and when the called party subscriber answers, the platform 18 interacts with the called party by announcing the name of the caller (if the calling party is also a subscriber and has a name announcement recorded), or the digits of the telephone number of the calling party are announced to the called party. With this announcement, the called party can choose whether to take the call. During this time the calling party at the telephone 10 continues to hear the ring-back signal being generated by source platform 14, so the caller is not aware the called party answered the phone. Rather than accept the call, the called party can choose to direct the caller to the called party's voice mailbox, which is resident on the destination platform 18, to leave a message. Call screening dynamically allocates the resources of the destination platform responsive to the service being initiated. The destination, or the side of initiator of the service (in this case the destination where the subscriber has subscribed to call screening), manages the service.

Audible call screening can also be performed where the called party is allowed to listen to a message being recorded as is discussed in the disclosure entitled A Telephone System Integrating ... And Call Answering System previously mentioned.

The Find-Me service is a feature where the called party is a subscriber and has several telephone numbers where the subscriber may be reached (home, office, car). The destination platform 18 attempts each of the numbers in succession, or attempts all of the numbers at the same time, in the hopes of contacting the subscriber.

Network-Camp-On is a feature by which the destination platform 18 monitors the outgoing line to telephone 20 as it does normally, and in the case of a busy or ring-no-answer condition, the source platform 14 offers a feature by which the source platform 14 will call the caller back when the destination platform 18 is successful in contacting the called party. During the network camp-on service the network resources are dynamically deallocated when the service is requested and dynamically reallocated when the called party becomes available. When a busy or ring-no-answer occurs the system can also attempt to reach the called party via the Find-Me Service if it is active for the called party.

Call-Back-From-Call-Queue Service is similar to the Network-Camp-On feature discussed above, except it is used in the scenario where the called party is a service or help line that has the caller in a queue to be answered by the next available agent. Rather than having the calling party wait on hold, the destination platform 18 waits for a human being to answer the phone, and then tells the human being the customer is being contacted, and issues a network Call-Back, as discussed above, through source platform 14.

The Meet-Me (pager) service is a feature where the called party is a subscriber and has a pager number associated with the service. The destination platform 18 initiates a page, and adds a record to the subscriber database for the called party indicating there is a call holding for the subscriber on source platform 14. The called party upon receiving the page can initiate a call to the platform 18 (from anywhere), and the called party subscriber is told, upon entry, a call is holding, and allows the called party subscriber to accept the call. If the called party accepts the call, the calling party is taken off hold and the calling and called parties are connected together.

The Call-Forwarding feature is one where the called party subscriber record on the destination platform 18 has a different number for the subscriber. The different number is obtained by the source platform 14 from the destination platform 18 and used by the source platform 14 to initiate a call. The source platform 14 could either instruct the calling party the subscriber number has changed, or just use the different number without the caller's knowledge, based on the desires of the called party. Dynamic allocation and deallocation of network and platform resources occurs during call forwarding when the destination platform is released upon sending the source 14 the new telephone number and a new path through the network is allocated for the new telephone number.

Call-Interrupt is a feature where the called party allows a second caller to interrupt a conversation already occurring over the network 12 to telephone 20. When the second caller calls telephone 20, the destination platform 18 first checks (by looking in the subscriber database) to see if the called party subscriber is already on the line before placing the outgoing call session. If the called party subscriber is already on the line, the source platform 14 gives the caller the option to interrupt the call (if the called party subscriber allows this to occur) - or to notify the called party subscriber via a tone or series of tones played on telephone 20 indicating a call is waiting for the subscriber. The subscriber can then press a key to accept the new call. Call-Interrupt is also applicable when someone calls the calling party. By not sending voice packets to the calling party during an interrupted call, the resources of the packet-switched network are released for other uses.

In Business-Dialing a business has customer premise equipment (CPE) attached to the business PBX. The equipment provides access to the digital IP network 16. This access is provided by incorporating the functions of the present invention into the CPE. This allows the business to avoid the expensive per-minute access charges incurred whenever a call (local or long distance) is placed. This is also a savings to the digital IP network provider since it reduces the PSTN lines in use.

The Automatic Call Distribution (ACD) feature is one where a caller is put in a call queue for the called party subscriber (similar to the call waiting feature described above), except the queue is managed by the network to make sure calls are handled in the order in which they arrived. Virtual ACD is a similar feature, except the called party subscriber has a list of phone numbers used to accept incoming calls, and the network chooses the next available agent to process the call. Note the agents can be located anywhere on the network 12.

In Anywhere-Speed-Dial a calling party subscriber can have any number (typically up to 10) of speed dial numbers recognized by the platform 14. These numbers are preprogrammed either through the voice application interface, or via the World Wide Web (see the discussion of administration below). These speed dial numbers are available to the calling party subscriber regardless of what telephone is used to connect to platform 14.

Call-Transfer is a feature similar to the Call Screening feature mentioned above, however, the called party is allowed to input a new telephone number to which to transfer the call, and the source platform 14 starts a new conversation using the new phone number. Call transfer can also be used by either party during the real-time conversation to indicate the call should continue at another telephone number. The packet path to the old destination is dynamically deallocated and the path to the new destination, based on the transferred telephone number, is dynamically allocated in this transfer service.

Conference-Calling is a feature by which either the called or calling party can request another party be added to the call. In this case, the appropriate platform 14/18 initiates a new connection, and reserves additional digital signal processor (DSP) resources to blend the conversations of the parties.

In Administration via the Web, since the entire network is one where the Internet Protocol (IP) is used to communicate between the platforms 14 and 18, http servers are provided to communicate with the subscriber databases stored on the platforms 14/18. In this way, system administrators or end user subscribers can maintain and manage their enhanced calling service features via PC's attached to the network 16. Naturally, security systems like SSL 3.0 need to be used to make sure the subscriber is authenticated before being permitted to make any changes. This type of administration significantly reduces the number of calls to be handled by a customer service agent, thus allowing the service provider to save money. It also allows the end user subscriber to exercise greater control and permits the end user subscriber to manage complex features (like call forwarding and speed dial numbers) that today prove too onerous to perform via a telephone handset. Web-based-administration allows a subscriber to access a "home-page" of a service provider, such as a telephone company, using a conventional "browser" and make changes to the subscriber's database records, such as changing a call-forwarding telephone number or updating a find-me telephone number list. This access is like the access provided in the system described in U.S. application serial no. 08/743,793 incorporated by reference herein.

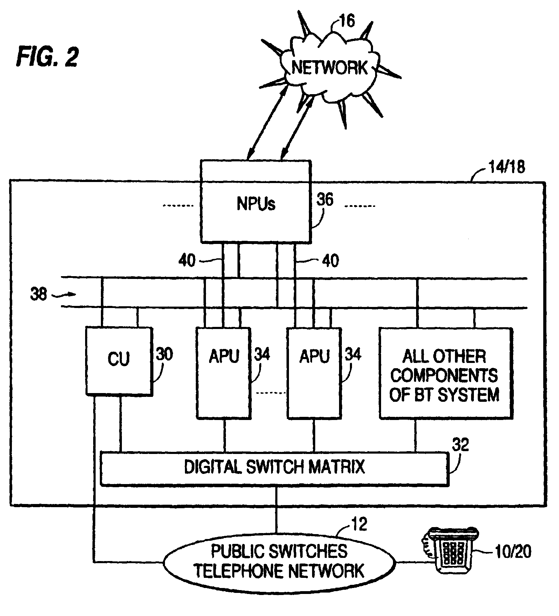

A platform, such as platform 14/18, has an architecture based on the distributed voice mail platform described in U.S. patent 5,029,199 and incorporated by reference herein. As shown in Figure 2, the platform 14/18 includes a control unit (CU) 30 which communicates with the PSTN 12 for telephone call control and routing. An incoming call or an outgoing call is routed through a digital switch 32 to form a connection between an application processing unit (APU) 34 performing the call processing of the platform 14/18 and the PSTN 12. The digital switch 32 and the routing control by the CU 30 is not required when ports of the APU 34 are dedicated to the telephony operation and a central office switch within the PSTN 12 hunts for an available trunk to the APU 34. The APU 34, in addition to performing the functions necessary to interact with the calling and the called party, also performs A/D and D/A conversion of the speech, compresses/decompresses the speech, echo cancellation and silence detection. The digitized speech of an internet telephone call is transferred between the APU 34 and a network processing unit (NPU) 36 over an internal ethernet 38. The system can also include a high speed 100Mb ethernet connection 40 directly between the NPU 36 and APU 34. The NPU 36 is essentially a conventional IP router, such as available from Cisco Systems or Bay Networks, through which the digital speech is routed. The NPU 36, as an alternative, can include an asynchronous transfer mode (ATM) interface to allow direct operation with ATM switches in the Internet 16. Alternatively, other packet-based protocols, such as frame relay, and other packet-based networks can be used. The NPU 36 routes packets over a conventional virtual circuit through the network 16 to another remote APU in platform 18 and assembles/disassembles data packets of the digital speech in a conventional Internet Protocol (IP), such as User Datagram Protocol (UDP). Each of the units 30 and 34 is based on a personal computer, such as an Intel Pentium™ 133/166 MHz processor with 32M RAM, 4GB mirrored/redundant disk drives running the Microsoft WindowsNT™ operating system and coupled together by a 10Mb ethernet 38, such as found in the AccessNP™ system available from Boston Technology, Inc. The units also include the appropriate conventional interface units, such as voice modules from Natural Microsystems including a high speed digital signal processor (DSP) and modem cards, necessary to perform the interface function of that particular unit. It is also possible for the APU 34 to be configured with the circuits necessary for the APU 34 to perform the functions of the NPU 36.

During a typical incoming telephone call to a platform, such as platform 14, the CU 30 of the platform receives the telephone number dialed by the calling party from the PSTN 12, provides appropriate addresses to the switch 32 and thereby routes the call from the incoming trunk to an available voice port of an APU 34 that includes an internet telephony application. The CU 30 also informs the particular APU 34 assigned the call the call is arriving on the available port. During an outgoing call, such as when the platform 18 is establishing a link with the called party over the PSTN 12, the CU 30 receives a request for an assignment of an trunk to an available APU port and commands the switch 32 to provide a connection to the available trunk.

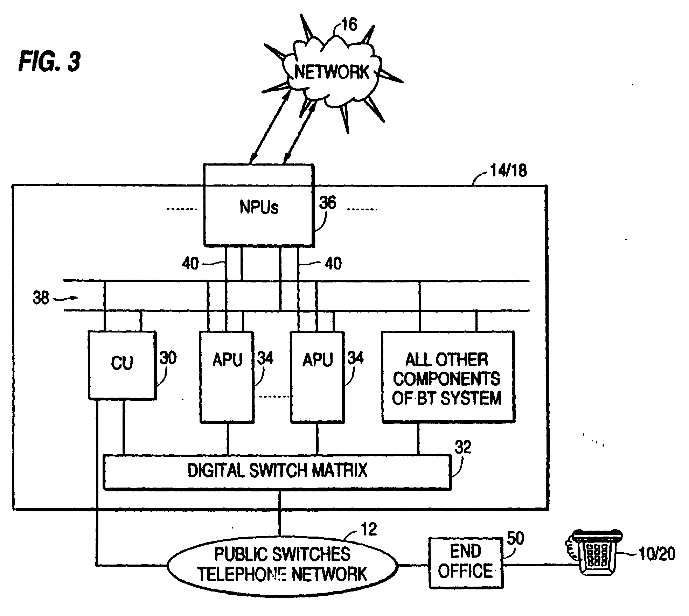

Figure 3 depicts another embodiment which is typically used for long distance toll calls where the caller is charged for the individual calls. When the user places a toll call, such as by dialing "1" followed by the called party number, an end office 50 automatically transfers the call through the PSTN 12 to the platform 14, in the same way that end offices transfer toll calls to a preferred long distance provider today. At the same time, the calling party telephone number and the called party telephone number are transferred by conventional signalling, such as SS7 signalling, to the CU 30. The CU 30, in addition to assigning an APU 34 to handle the call and controlling switch 32, supplies the assigned APU 34 with the two telephone numbers. The APU 34 checks the subscriber database to confirm that the calling party telephone number is of a subscriber, and then looks up the destination platform address associated with the called party telephone number and places the call, the steps of which will be described in more detail later herein.

The internet telephony application of the APU 34 interacts with the calling party using a conventional interactive response type process to obtain the information needed to connect the call, such as calling party telephone number, calling party identification and called party telephone number. Once a connection has been established the APU 34 samples the incoming speech of the calling party (or called party) and compresses the speech using a compression procedure, such as the low bit rate procedure available from DSP Group as TrueSpeech/H.323 and which is typically used for the audio portion during video conferencing (see www.dspg.com for detailed information about this technology). The APU 34 forms speech segment packets having the IP address of the destination then sends the packets over the internal ethernet 38 to the NPU 36, which routes them over the network 16 to the destination. During the operation for establishing a link over the PSTN 12 to the called party telephone 20, the APU 34 performs a conventional out-dial process type process to "dial" the called party telephone and interact with the called party to establish the link. The APU 34 also performs call analysis, to be discussed in more detail later herein, and provides the results, such as indicating the called party telephone is "busy" or has hung-up, to the source platform 14 for communication to the calling party if appropriate. For speech data arriving over the Internet 16, the APU 34 performs the reverse operation to output speech signals to the telephone 10/20 through the switch 32 and PSTN 12.

Although not shown in Figure 2, the APU 34 preferably includes echo cancellation technology, such as available from Coherent Communications and which will be discussed in more detail later herein, and located on the PSTN "side" of the platform 14/18 to cancel echoes produced in the 2-to-4-wire hybrid circuits of the PSTN 12.

The platforms 14/18 also preferably perform a silence detection operation, which will also be discussed in more detail later herein, and do not send speech packets when the parties are not speaking, thereby conserving network resources. In this situation, the other side does not receive speech packets during a silent period and "plays" silence to the party.

Several different "connection" protocols can be used to establish a connection between two platforms over existing digital packet-switched-networks, including the internet protocol (IP), asynchronous transfer mode (ATM) packet switching protocol, frame relay, etc. The present invention can establish a connection and perform voice signal transfers using the Internet Protocol or other protocols. However, if the platforms are on the same ATM network, it is preferable that the Internet Protocol be used to establish the initial rendezvous, with the ATM protocol being used to establish an ATM connection, using ATM network IDs, between I/O ports of the platforms. Using an ATM connection provides improved delay characteristics as compared to an IP connection. The UDP protocol is preferably used whenever an ATM connection cannot be made.

During a period of UDP packet exchange between the platforms 14/18, such as when the calling and called parties are talking, each side sends each UDP packet with a monotonically increasing packet sequence number. The receiving side discards any packet arriving with a sequence number less than or equal to the packet sequence number of the packet currently playing (or which has completed playing).

The processes discussed below with respect to the present invention are described for convenience using flow charts depicting the operations as flowing from one operation to another. However, the processes are preferably implemented as interrupt driven processes. For example, during a conversation, the source platform 14 digitizes the speech of the subscriber and sends it to the destination platform 18 to be played to the caller, and when the caller hangs up, this is detected by the call monitoring operation of platform 14, which produces a hang-up interrupt detected by an interrupt manager that then executes the hang-up operations.

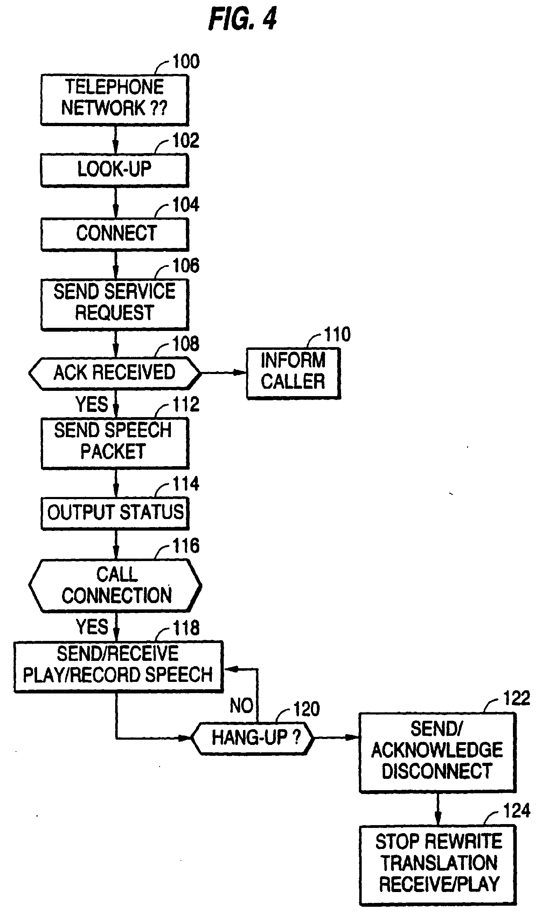

As previously mentioned, when a caller calls the platform 14, the caller selects the Internet telephony service and enters 100 a telephone number of the called party telephone, as depicted in Figure 4. When the caller has entered this destination telephone number, the source platform 14 APU (or CU) performs 102 a table look-up to obtain the name or address of the destination platform 18 servicing the area of the called party. The destination platform 18 is known by a specific machine name, such as "anp12.bostech.com." The source APU uses the Domain Name Service (DNS) of an Internet service provider (ISP) to translate the machine name of the platform 22 to its IP address. The source APU then connects 102 (issues a "TCP connect" using the TCP/IP) to the IP address returned by DNS, at a particular TCP port number (PN). The port number is "hard coded" to refer to a particular service or application, and in this case the service may be called "Internet Telephony Service," using the IP address and port number (DPIPPN) of the destination platform 18. For example, the "http" service is (by default) at TCP port "80." The application/service can be running on one of the destination APUs or on the destination CU. The "TPC connect" packet includes the TCP/IP address of the source APU. When the packet is a "TCP connect" packet from the platform 14 the destination platform 18 responds with a "TCP accept" packet.

After connecting to the destination platform 18, source APU sends 106 a service request packet to the platform 18 using the DPIPPN as the destination address. This packet includes the following information: the called party telephone number, the calling party subscriber telephone number, the appropriate security code for authentication of the calling party subscriber, the UDP address of the process on the source APU including the UDP port number (UPN). The destination platform 18 stores this IP address and port number (SPIPUPN).

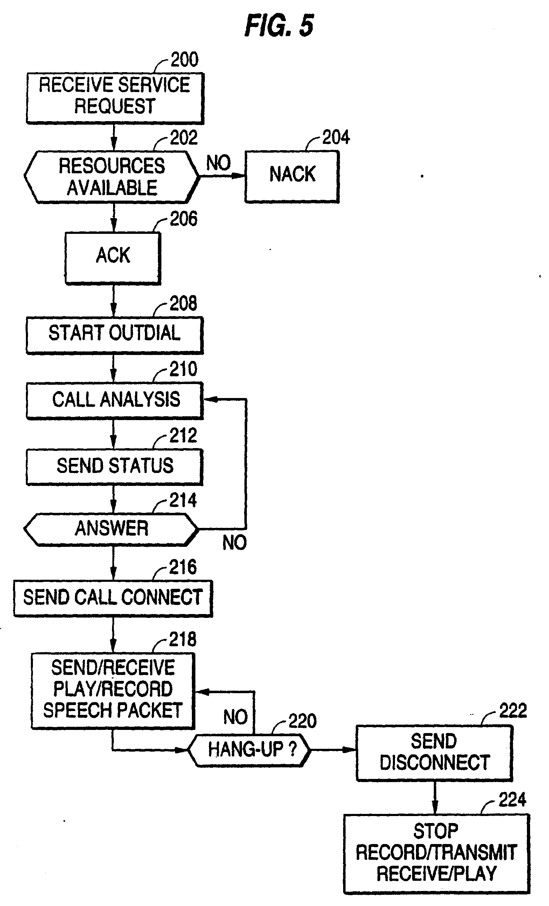

The destination platform 18 receives 200 (see Figure 5) the request and determines 202 whether there are available resources, that is, whether there is a destination APU and a destination telephone trunk available to service the request. The available destination platform 18 responds to the service request with an indication packet 204 sent to the SPIPUPN indicating there are no resources available (NACK) for processing the request or responds 206 with an acknowledgement (ACK) including the UDP network address and port number (DPIPUPN) of an available port (or process) on an available APU. The destination APU also starts 208 an outdial operation to dial the called party telephone number using the received called party telephone number.

The source APU can indicate this call progress to the caller but otherwise waits for further information from the destination APU and presents or plays silence to the caller.

Substantially immediately after the ACK is sent, the destination APU sends a set of test packets, preferably three, to the source APU in rapid succession. These packets are used by the source APU to calculate a maximum network delay. Each of the test packets from the source includes a time stamp. The time stamp is incorporated into the reply packet sent by the destination to the source. The difference in the current time at the source and the time stamp in the reply packet when the reply packet is received at the source is used to determine a round trip delay. The round trip delay is divided by two to get the one-way delay. The one-way delay time is stored in the source APU and also sent to and stored in the destination APU.

If a NACK is received, an acknowledgement is not received 108 (see Figure 4) or if a "TCP accept" is not received within a predetermined period of time, the source APU informs 110 the caller and allows the caller to initiate an appropriate enhanced service, such as Message-Delivery.

Once the acknowledgement is received 108 from the destination, the source starts sending 112 caller-generated UDP speech packets to the destination using the DIPUPN as the destination address and, until the called party answers, the destination APU does not accept the packets or discards them.

The destination APU, once the telephone number is "dialed," performs conventional call analysis 210 (see Figure 5) on the call including detecting ringing, busy, detecting a ring-no-answer, capturing the speech of an operator intercept of an incorrect number or malfunction, etc. and provides the call analysis information, such as a ring indication to the source. The destination APU sends 212 the status information, for example a ring packet, to the source APU where the information (the ring indication) is provided to the caller, such as by outputing a ringing signal generated by the source APU, a busy signal or the forwarded intercept digital speech as needed. Whenever the status remains the same, such as while the telephone rings, no additional information is sent from the destination to the source and the source APU provides 114 the appropriate information (ringing in this example) to the caller. Note when there is an event, such as a busy or ring-no-answer, that can be used to trigger an enhanced service, the source APU provides the caller appropriate options as discussed later herein in detail. Also, when an operator intercept is detected during call analysis, such as when a wrong number is dialed, a packet is sent to the source followed by a connect, as discussed below, so the intercepted speech can be sent to the source.

When the called party answers 214, the destination APU sends 216 a call connection packet to the source APU. The source APU can then initiate a billing event if appropriate. The connection packet is immediately followed by beginning 218 to record and send speech packets of the called party to the source APU using the SIPUPN and the destination APU begins playing the speech packets received from the source APU. The source APU, when it receives 116 the call connect packet, also begins 118 playing received called party speech packets and continues recording and sending speech packets of the caller. This begins a period of bi-directional digital speech UDP packet transfer where the source and destination APUs capture speech signals and send speech packets as well as play received speech packets.

During the call set-up, if speech packets are received from the destination before the "TCP connect" or before the acknowledgement, the present invention performs the connect status change and begins speech transfer.

During the bi-directional speech transfer period, speech samples are conventionally compared, in the APU, to an energy threshold (including amplitude and time factors) below which the sample is considered to represent silence. If the sample is below this threshold no speech signal is transferred. In this way the network is not used for speech data transfer except when the parties are actually speaking. In this situation, the other side does not receive speech packets during a silent period and "plays" silence to the party. The silence detection operation preferably has a very short silence-to-energy detection threshold period (<5ms) to insure all the speech of the parties is captured and there is little or no speech clipping. The operation preferably has a relatively long energy-to-silence detection threshold period (>500ms). By meeting these criteria, computing resources are not wasted flipping back and forth between energy/silence. Several thresholds are preferably provided to allow distinguishing between different types of events, such as silence and a constant energy dial tone produced when a party hangs up, as well as to allow adjustments to occur when a telephone trunk is particularly noisy and would result in speech signals being transferred when the speaker is really silent or when a speaker speaks very quietly.

The segments of sound digitized and formed into a packet are preferably as small as possible. However, making a packet as small as 5 milliseconds (ms) of sound results in excessive addressing data overhead. A 20ms segment is an appropriate fixed and minimum sound segment size for a packet. A 20ms speech segment results in about 20 bytes of speech data which when combined with the 32 bytes of UDP-IP header data results in a packet with an overhead of over 50%. Preferably, the sound segment size of the packet is adjustable rather than fixed. The maximum delay determined during the initial call setup is used to adjust the size of the packets. The maximum delay is multiplied by 1.5 to obtain the segment size. If the network delay changes during the call, the sound segment size of the packet can be adjusted accordingly.

As the telephone call proceeds, the source and destination APUs monitor the energy of the trunks of the caller and called parties. When a hang up is detected 120/220 based on signaling from the PSTN, such as a ground start signal, the APU detecting the disconnect, say the destination APU, sends 222 a disconnect call packet to the other APU. The disconnect call packet is sent to particularly distinguish silence, when no data is being transferred, from an actual disconnect. The source APU terminates the billing event, stores the billing record and responds 122 with a disconnect acknowledgement packet. Both APUs stop 124/224 sampling, release their respective trunks (go on-hook) when the party hangs-up and indicate to the CU they and the trunks are available while the APUs terminate the virtual link between the platforms.

If the calling party does not hang-up after a period of time after the disconnect, the system can play a prompt to the calling party to start another call or some other service.

It is possible for the called party telephone to have an enhanced service, such as call screening. In such a situation, the call connect process previously discussed is not initiated until the destination APU has performed the call screening process to allow the called party telephone to be used to accept or reject the call from the calling party telephone. During such screening the caller receives a ringing signal initiated by the call analysis. If the called party refuses the call, the destination APU can immediately issue a disconnect to conserve network resources, with the source APU either continuing to play a ringing signal to the caller or providing a refusal message and prompting the caller to allow a message to be saved and delivered, such as described below.

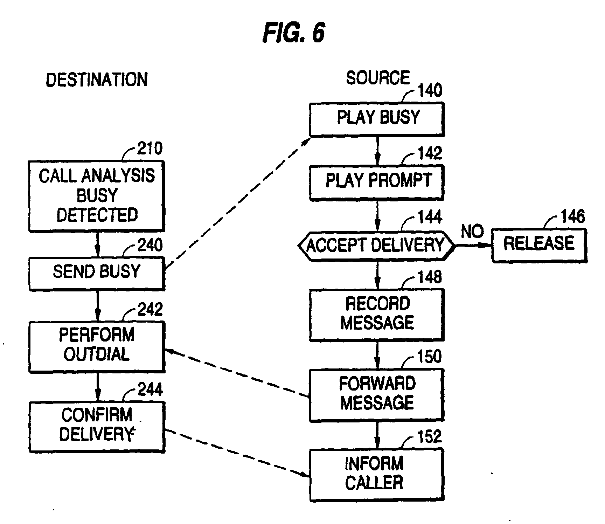

The enhanced calling service called Message-Delivery typically is effective when the called party does not have a voice mail service or an answering machine. Message-Delivery, as depicted in Figure 6, starts with a call analysis operation that detects a busy (or ring-no-answer "RNA"). A busy packet is forwarded 240 to the source APU which plays 140 a busy tone to the caller. The platforms also proceeds through the call disconnect phase previously discussed to stop the sending of speech packets from the source platform 14 to the destination platform 18. At this time a prompt is overlaid on or multiplexed 142 with the busy tone (which busy tone is provided at reduced volume). The prompt asks the caller if the caller would like to leave a message for the destination. If the caller hangs up, or if the caller does not accept 144 the Message-Delivery Service, the trunk is released 146. If the caller accepts the service, a message is recorded 148. Once the entire message is recorded, including allowing the caller to change the message, etc. and indicate the message is to be sent, the source APU forwards 150 the entire message to the destination APU using the DPIPPN with a request to deliver the message. In doing this the source APU establishes a TCP/IP connection with the destination APU and conventionally transmits the message. The destination APU performs 242 a conventional outdial process to provide the message to the called party. When the called party receives the message, the destination APU sends 244 a completion message packet to the source APU. This packet can be used to bill for the message delivery or inform 152 the caller the message was received. Of course, if the message cannot be delivered within a predetermined period of time or the called party telephone has call screening and the called party does not accept the message, a failure message describing the problem can be provided to the caller.

During a ring-no-answer situation, after a ring indication has been received by the source platform 14 from the destination platform 18 and after a predetermined period of playing a ring signal (say 24 seconds) to the caller, a ring-no-answer prompt is played to the caller via the source APU overlaying the ring signal while the destination APU continues to monitor the called party telephone. The ring-no-answer prompt asks the caller if the Message-Delivery Service is to be initiated. If the called party does not answer and the caller accepts the Message-Delivery service, the source APU initiates a disconnect followed by message recording 148 and delivery 150 as previously discussed. If, however, the called party answers, as detected by the call analysis process, before the calling party accepts the Message-Delivery service, the destination APU sends 216 a call connect packet, the connect is recognized 116 and the caller and called parties are connected 118/218 and the message delivery service is discontinued.

In the Call-Back service, the sender of the message can indicate the receiver of the message can call the message sender back after the message is received. This facilitates urgent communication. In this situation, the message forwarded in step 150 also includes a command packet initiating the Call-Back service in the destination APU. This command includes the telephone number of the original calling party. When the called party has received or listened to the message played via the Message-Delivery service noted above, the destination APU plays a prompt asking if the called party wishes to return the call. If the called party at the destination APU accepts, the destination APU initiates a call by starting with the look-up step 102 depicted in Figure 4. The return call proceeds as is depicted in Figures 4 and 5.

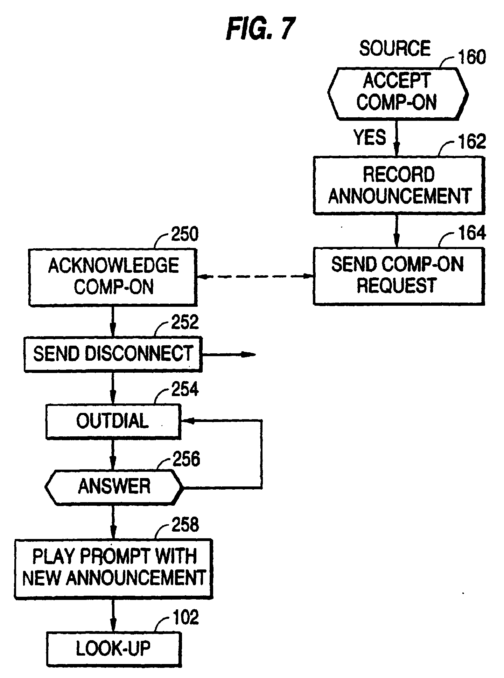

The Network Camp-On service starts with a busy detection being transmitted 240 to the source APU and a prompt 142 being played to the caller. The prompt is similar to the previously-described prompt for Message-Delivery, but the Network Camp-On prompt asks the caller if the caller would like to camp-on the line until the called party answers. When the service is accepted 160 (see Figure 7), the caller can be allowed to record 162 a brief message or a name announcement. Once the recording is completed, the system sends 164 a camp-on request, which includes the name announcement, to the destination APU. When this request is received and acknowledged 250, the destination APU initiates a disconnect, as previously discussed. If the line becomes unbusy while the Camp-On is being processed and before a disconnect is started by the destination APU, the system puts the connection through starting with step 216, as previously discussed, and the camp-on process is terminated at the source and destination. After the disconnect has occurred, at periodic intervals the destination APU performs an outdial operation 254 to call the called party. When call analysis detects an off-hook or answer 256, the destination APU plays 258 a message, which can include the name announcement recorded by the caller, asking the called party to hold while the call is connected to the calling party. The destination APU initiates a call by starting with the look-up step 102 of Figure 4 using the calling party number provided 106 in the request for service.

During the Call-Back-From-Queue service the caller has, for example, called a help service and been put in a queue to obtain service from the next available service provider or agent. The caller in this situation can initiate this service by depressing a selected key on the caller's telephone. Once the caller has selected the service, the destination APU is informed, by a call back queue packet, the call is to be disconnected through the network 16, as previously discussed. The destination APU continues to monitor the called party trunk using conventional call analysis and each time the destination APU detects speech, the destination APU plays a prompt requesting the called party enter a digit sequence, such as "#1", to speak to the caller. The system, once the digit sequence is detected, initiates a connect back to the caller, such as previously discussed, by starting with step 102 of Figure 4 using the calling party number. It is also possible for the system to use speech recognition technology to recognize the called party has now answered and perform the call back responsive thereto.

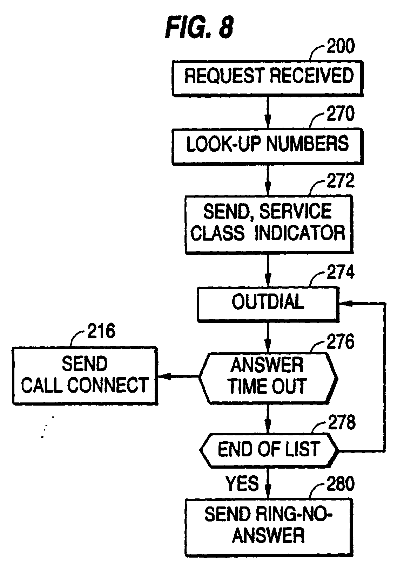

The Find-Me service requires the called party telephone be a subscriber to the packet-switched-network telephone service. The destination APU, as depicted in Figure 8, when the request is received 200 from a source platform and after a table look-up determines 270 the called party is a find-me service subscriber, sends 272 a service class indicator to the source where the source APU can play a message to the caller indicating the system will be trying several numbers to reach the called party and, if desired, allow the caller to hang-up. If the caller continues with the call, the destination APU repeats the outdial process 274 for each of the numbers stored for the called party performing call analysis, allowing 276 the called telephone to ring a predetermined number of times before hanging-up and dialing the next number. When the called party answers the connect operation (216) previously discussed is performed. If the end of the list is reached 278, a ring-no-answer packet is sent to the source APU.

The Meet-Me pager service requires the called party subscribe to a pager service and the destination APU to recognize this via a look-up, such as step 270 in the Find-Me service (see Figure 8). When the called party does not answer, the destination APU sends a "class of service" indicator to the source platform, as in step 272, where a prompt is played asking the caller if the called party should be paged. If the caller accepts the service, the source APU sends a page request packet to the destination APU to request the page. The destination APU outputs the page request with a specific return telephone number (such as of the destination platform) and can also send a page identification code. The destination APU then initiates a disconnect to conserve network resources. When the paged party calls the specific telephone number, the destination APU ascertains the caller is the party paged by requesting the paged party to enter the page identification code, or if such a code is not used, by entering an account number and passcode. Once the paged party is identified, the destination APU plays a message indicating the call is being connected and simultaneously performs a connect operation to the source APU by sending 216 a call connect packet. The calling party and the paged party are connected and the call continues 116/218 as previously discussed. If the caller hangs-up before the paged party responds, the source APU informs the destination APU the caller has dropped the request. When the paged party calls the specific number, the destination APU responds to the paged party with the option of calling the caller back as occurs in the Call-Back service.

In the Call-Forwarding service, the source APU attempts to establish a call to the called party using a telephone number that, unknown to the source APU, has been forwarded to a different number. The destination APU, when it receives the service request, recognizes the number has changed using a look-up operation like in step 270 and responds to the source APU with a call forward indicator packet and the new telephone number. The source APU can inform the caller of the delay if desired. The source APU then starts a call connect process as if the caller had just entered this new number by performing the look-up 102, etc. necessary to establish a call to the new number.

In the Call-Interrupt/Call-Waiting service, when the subscriber calls the platform to obtain service, the platform records the subscriber's telephone is in use using the platform. When a destination platform 18 receives a service request prior to starting the outdial 208 for the telephone number, the destination APU checks the subscriber database in the CU to determine if the subscriber telephone number is currently in use. When the called party telephone is in use and the called party telephone has subscribed to the service, the destination APU sends a call progress indication to the source indicating there is a call in progress by the called party. The source APU plays a prompt to the caller indicating the called party telephone is in use and requesting the caller indicate whether the call should be interrupted, or whether the caller wants to hold or leave a message. The response of the user is relayed to the destination APU allowing the destination to disconnect if a message is being taken, play an interrupt tone and message to the called party if an interrupt is to occur or play a call-waiting tone if the user is waiting. The called party can accept the interrupt or switch to the waiting call by entering a code in the telephone. When the code is recognized by the destination APU monitoring the call, the destination APU, if the line is being using for another call, discontinues sending speech packets to the other location, discontinues playing speech packets from the other location and sends 216 a connect to the source and the call is connected as previously discussed. When the interrupting call is finished by the receipt of a hang-up packet from the other location or the entering of a switch back code by the called party, the exchange of speech packets with the other location continues. If the called party was involved in another operation, such as performing mailbox administration, the operation continues. It is also possible to bridge the two calls using a different code so all parties receive the speech packets creating a conference call.

In the Automatic-Call-Distribution (ACD) or virtual ACD service, the caller source address is placed in an ordered queue in the destination APU with the destination APU sending an indication of the entry into the queue to the source APU where a corresponding message is played to the caller. Traditionally, the caller remains in the line until an agent becomes available, however, it is possible to provide a call-back when the agent becomes available. The destination APU monitors call progress for multiple service personal or agent telephones and initiates a connect (216) between the first available agent and the caller at the top of the queue. The call progresses as has been previously discussed. In virtual ACD, the called party has agents located at different points in the packet-switched network 16, each with a different telephone number. When an agent signals to the agents APU that the agent is available for the next call, the agents APU accesses the queue and obtains the next caller from the list, including the IP address and port of the caller, and issues a connect directly to the caller. Once the connect occurs the agent and the caller talk. If the agent actually disconnects from the agents APU and frees up the APU port, the agent should be required to go through an authentication process to be revalidated as an agent. Because the connect is initiated by the agent's APU, the agent can be located anywhere on the packet-switched network.

In the Anywhere-Speed-Dial service, the source platform (typically on the CU) maintains a list of telephone numbers for the subscriber. When the subscriber calls the source APU, from any telephone, and enters the speed dial code and number indicator, the APU accesses the list and obtains the complete number and then starts the process with the look-up step 102 discussed with respect to Figure 4.

In the Call-Transfer service, when a transferring party[, say party 2,] (either a calling or called party) initiates a transfer operation, the APU, whether it is the source or destination APU, stops outputting (playing) the speech from the party, say party 1, to be transferred and stops sending speech signals to the party 1, essentially putting the party 1 on hold.

In the situation where the transferring party (party 2) does not want to speak with the party, say party 3, to whom the call is being transferred, what is called a blind transfer, the party 2 APU sends the telephone number and a transfer command to the transferred party 1's APU. The party 1 APU initiates a disconnect with party 2 and starts a new call by performing a look-up 102 and requesting a connection to the party 3 to whom the call is being transferred.

If party 2 desires to speak with the party 3 to whom the call is to be transferred prior to the actual transfer, which is called a monitored transfer, after sending essentially a park command to party 1 so the party 1 APU stops sending speech packets and stops expecting to receive speech packets, party 2 APU starts a normal call to party 3. After a connection is made and party 3 indicates the transfer is acceptable, party 2 indicates the transfer is to take place. The party 2 APU sends the party 3 APU the IP address and port number of party 1. The party 2 also initiates a disconnect with party 3. Party 3 then initiates a connect with party 1 using the IP address and port received from the party 2 APU. Upon receipt of the connect, the party 1 APU starts packet exchange with the party 3 APU and the parties start talking.

If party 3 does not accept the call and hangs up or if party 3 does not answer, the party 2 APU issues a connect to the party 1 APU and the conversation between party 1 and party 2 resumes.

During the Conference-Calling service, calls are connected between all the parties so each APU exchanges speech packets with all the APUs involved in the conference. In the original configuration, party 1 is talking with party 2 and party 2 initiates the conference with party 3. To establish the connection to party 3, the party 2 APU discontinues the transfer of speech packets to party 1 and initiates a call to the party 3 by starting with the step 100 of inputting a new telephone number. When party 2 has affirmed party 3 is to become involved in the conference, the party 2 APU sends the IP address and port number of party 1 to the party 3 APU, the party 2 APU also sends the IP address and port number of party 3 to the party 1 APU. The party 3 APU begins sending speech packets to and accepting speech packets from both party 1 APU and party 2 APU, and the party 1 APU begins sending speech packets to and accepting speech packets from both party 2 and party 3. The party 2 APU also sends to and receives from the party 1 and party 3 APUs. A bi-directional data stream is thereby established between each party of the conference call. Each APU is thus responsible for combining the speech signals from IP addresses for which it has received a conference connect command for each party of the conference using a conventional voice signal combination scheme, such as averaging, and is responsible for sending the speech packets of the caller associated with the APU to the other APUs of the conference call.

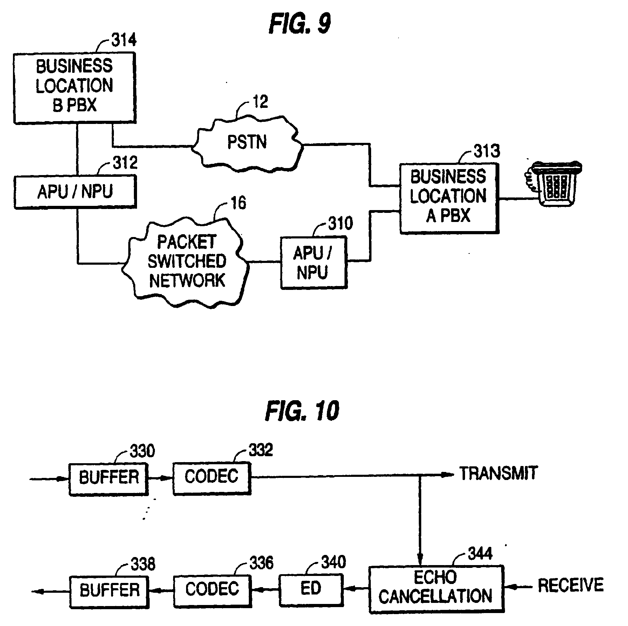

The Business-Dialing service requires a business scattered over a geographical area to have platforms 310/312 (or at least the network interface (APU/NPU) subset of a platform) associated with or part of the PBXs 313/314 at the business locations, as illustrated in Figure 9. When a caller within the business has dialed a number, the PBX system, say 313, looks-up the number in a network database or routing table to determine whether a packet-switched network call can be placed instead of a PSTN call. When the called party has a network number, the call is transferred to the platform 310 and the process of Figure 4 is performed to place the call to the other business location of the company over the packet-switched-network 16. The network interface 312 at the destination provides the call to the destination PBX 314 just as the destination APU provides the call to the PSTN to call the destination telephone as described with respect to Figure 5. That is, the destination PBX 314 receives a call from the APU just like a call from the PSTN 12 and connects the call to the called party telephone just as it would a call received over the PSTN 12. Each PBX in such a network is required to include one or more telephone trunks for connection to the network interface. This type of system saves the access charge levied by the local telephone companies.

The above-description is of some of the special services that can be provided over the Internet. Other services can of course be provided.

Echoes are typically caused by the analog circuits (hybrids) in channel banks and other telephone circuits for voice channels. For example, circuits associated with a destination telephone typically reflect an echo of source speech back to the source. It is important to perform echo cancellation as close to the source of the echo as possible, because, the larger the delay between the generation of an echo signal and the cancellation, the greater the amount of signal information it is necessary to compare. In the present invention the echo cancellation is preferably performed in the DSP of the APU 34 on the line side for echoes reflected from the PSTN side. In the system of the present invention, as illustrated in Figure 10, an application transmit buffer 330 in the APU provides an outgoing speech signal to a transmit CODEC 332 that produces PCM signals transmitted and provided to an echo cancellation unit 334. The receive signal is processed by the cancellation unit 334 to remove the echo before it is supplied to a receive CODEC 336, which supplies the receive application buffer 338. The present invention uses echo cancellation technology available from Natural Microsystems. An energy detector 340 is also provided to allow the APU to stop sending speech data when there is no speech signal to be processed by the APU.

The present invention has been described with respect to making an "IP connection" between the source and destination using TCP/IP and UDP. As previously discussed the IP connection is made using an IP address and IP port of both the source and destination. It is also possible to establish calls using asynchronous transfer mode (ATM) switching.

The present invention has been described with respect to establishing a telephone call over a packet-switched network, such as the Internet, however, it is possible for the call to be established over other types of packet-switched networks, such as an intranet. The invention can also be used with the emerging standards (incorporated herein by reference) being developed for the Internet, such as H.323, H.245 and T120 to allow the call to be a videophone call and allow easier call conferencing, and with emerging protocols (incorporated by reference herein), such as RSVP, which allows the reservation of resources for a desired level of service quality, and RTP and RTCP, which enhance the timeliness and synchronization of the packets.

The present invention has been described as requiring the caller to interact with the source platform to set up the call by inputing the called party telephone number. However, just as long distance telephone calls are routed to different carriers depending on the carrier selected by the caller, it is possible for a central office switch to route all long distance telephone calls from a particular telephone to a packet-switched-network calling platform and place the call over the packet-switched-network automatically and transparently.

The present invention has also been described with respect to conducting telephone calls between parties using conventional telephones. The invention is also applicable to a situation where one of the parties to a call is placing the call via a computer, such that a subscriber accessing the platform over the internet using a browser can "telephone" another individual conversing using a telephone.

## Claims

1. A telephone system, comprising: first and second telephones;
a packet-switched-network; and
first and second interface conversion units coupled to said packet-switched-network and respectively to said first and second telephones, said units exchanging speech data packets over said network and converting packets into speech signals and speech signals into packets and dynamically allocating resources of said packet-switched-network as needed to complete a telephone call transaction.

2. A system as recited in claim 1, wherein the resources of said first and second interface conversion units are dynamically allocated to complete said transaction.

3. A system as recited in claim 1 or 2, wherein said first and second interface conversion units exchange network addresses used for exchanging the speech data packets.

4. A system as recited in any of the preceding claims, wherein said first interface conversion unit determines a network address of said second interface conversion unit using a telephone number.

5. A system as recited in claim 4, wherein said first interface conversion unit transmits a packet switched message to a said second interface conversion unit including a network address of said first interface conversion unit.

6. A system as recited in claim 5, wherein said second interface conversion unit replies to said request with an asynchronous transfer mode network address and said first and second interface conversion units establish a virtual connection over said packet-switched-network.

7. A telephone system, comprising:
first and second telephones;
a packet-switched-network; and
first and second interface conversion units coupled to said packet-switched-network and respectively to said first and second telephones, said units exchanging speech data packets over said network, converting packets into speech signals and speech signals into packets, and compressing the speech signals prior to conversion into speech data packets.

8. A telephone system, comprising:
first and second telephones;
a packet-switched-network; and
first and second interface conversion units coupled to said packet-switched-network and respectively to said first and second telephones, said units exchanging speech data packets over said network and converting packets into speech signals and speech signals into packets and providing enhanced calling services including one of: message-delivery, call-back, call-screening, network-camp-on, call-back-from-queue, find-me, meet-me-pager, call-forwarding, call-interrupt, call-waiting, business-dialing, automatic-call-distribution, virtual-automatic-call-distribution, speed-dial, call-transfer, conference-calling and network-administration.

9. A telephone system, comprising:
a telephone;
a packet-switched-network; and
an interface conversion unit coupled to said packet-switched-network and to said telephone, said unit converting speech signals from said telephone into speech data packets, transmitting the speech data packets over said network and converting received speech packets received over said network into speech signals supplied to said telephone.

10. A telephone system, comprising:
a switched telephone network;
first and second telephones connected to said switched telephone network;
a packet-switched-network;
a first interface conversion unit coupled to said packet-switched-network and to said first telephone, said first unit exchanging speech data packets with said packet-switched-network and converting data packets into speech signals and speech signals into data packets, said first unit comprising:
a first digital switching system coupled to said switched telephone network and routing a telephone call from said first telephone;
a first application processing unit coupled to said digital switching system, receiving the routed telephone call, interfacing with a caller to identify a called telephone number, determining a packet switched called address associated with the called telephone number, and converting speech signals to and from speech data; and
a first network processing unit coupled to said packet-switched-network and said first application processing unit, converting the speech data into data packets, transmitting the data packets to the address, converting received data packets into speech data provided to said first application processing unit; and
a second interface conversion unit coupled to said packet-switched-network and to said second telephone, said second unit exchanging speech data packets with said packet-switched-network and converting data packets into speech signals and speech signals into data packets, said first unit comprising:
a second digital switching system coupled to said switched telephone network and routing a telephone call to said second telephone;
a second application processing unit coupled to said digital switching system, calling the called telephone number and converting speech signals to and from speech data; and
a second network processing unit coupled to said packet-switched-network and said second application processing unit, converting the speech data into data packets, transmitting the data packets to the first network processing unit, converting received data packets into speech data provided to said second application processing unit.

11. A telephone system, comprising:
first and second telephones;
a packet-switched-network; and
first and second interface conversion units coupled to said packet-switched-network and respectively to said first and second telephones, said units dynamically allocating resources of said packet-switched network as needed to complete a telephone call transaction, exchanging speech data packets over said network, converting packets into speech signals and speech signals into packets and performing echo cancellation associated with the conversion.

12. A telephone system, comprising:
first and second telephones;
a packet-switched-network; and
first and second interface conversion units coupled to said packet-switched-network and respectively to said first and second telephones, said units exchanging speech data packets over said network, converting packets into speech signals and speech signals into packets and performing echo cancellation associated with the conversion, said conversion units comprising a speech signal silence detector and the converting of speech signals into packets is responsive to said silence detector.

13. A telephone call method, comprising:
dynamically allocating packet-switched network resources as needed to complete a telephone call transaction;
converting speech signals from a calling telephone into calling party speech data packets;
transmitting the calling party speech data packets to a called party destination using the packet-switched-network; and
converting the calling party speech data packets into called party speech signals.

14. A method as recited in claim 13, further comprising providing the called party speech signals to a called telephone.

15. A method as recited in claim 13 or 14, further comprising exchanging packet-switched-network addresses associated with the caller and called telephones.

16. A method as recited in any of claims 13 to 15, further comprising establishing a virtual circuit over the packet-switched-network.

17. A telephone call method, comprising: converting speech signals from a calling telephone into calling party speech data packets when the speech signals are above a speech signal threshold; transmitting the calling party speech data packets to a called party destination using a packet-switched-network; and converting the calling party speech data packets into called party speech signals.

18. A telephone call method, comprising: converting speech signals from a calling telephone into calling party speech data packets; transmitting the calling party speech data packets to a called party destination using a packet-switched-network;
converting the calling party speech data packets into called party speech signals; and
determining a network delay and adjusting a sound segment size of the data packets responsive to the delay.

19. A method as recited in claim 18, wherein the size comprises 1.5 times the delay.

20. A telephone system, comprising:
first and second telephones;
a packet-switched-network; and
first and second end points coupled to said packet-switched-network and respectively to said first and second telephones, said end points managing a telephone call between said first and second telephones over said network.

21. A telephone system as recited in claim 20, wherein said end points comprise means for providing enhanced calling services including one of: message-delivery, call-back, call-screening, network-camp-on, call-back-from-queue, find-me, meet-me-pager, call-forwarding, call-interrupt, call-waiting, business-dialing, automatic-call-distribution, virtual-automatic-call-distribution, speed-dial, call-transfer, conference-calling and network-administration.

22. A telephone call method, comprising:
managing a telephone call over a packet-switched network between source and destination end points.

23. A method as recited in claim 22, wherein said managing provides enhanced calling services including one of: message-delivery, call-back, call-screening, network-camp-on, call-back-from-queue, find-me, meet-me-pager, call-forwarding, call-interrupt, call-waiting, business-dialing, automatic-call-distribution, virtual-automatic-call-distribution, speed-dial, call-transfer, conference-calling and network-administration.

24. A method as recited in claim 22 or 23, wherein said managing comprises:
initiating a packet-switched packet communication between the end points; and
performing packet communication between the end points to establish a call between the end points.

25. A method as recited in any of claims 22 to 24, wherein said managing comprises:
initiating a packet-switched packet communication between the end points; and
performing packet communication between the end points to establish an enhanced telephone service between the end points.

26. A method as recited in any of claims 22 to 25, wherein said managing comprises dynamically allocating network resources as needed to complete a telephone call transaction.

27. A method as recited in any of claims 22 to 26, wherein said managing comprises dynamically allocating end point resources as needed to complete a telephone call transaction.

28. A telephone system, comprising:
first and second telephones;
a network; and
first and second interface conversion units coupled to said network and respectively to said first and second telephones, said units exchanging speech data packets over said network, converting packets into speech signals and speech signals into packets, and dynamically allocating resources of said network and said units as needed to complete a telephone call transaction.
